# EUROPEAN PATENT APPLICATION

(11) **EP 4 686 935 A1**
(43) Date of publication of application: **04.02.2026**
(21) Application number: 24382867.0
(22) Date of filing: 02.08.2024
(51) Int. Cl.: G01N 27/30, H01B 1/00, H01B 13/00

(54) **METHOD FOR TRANSFORMING DIELECTRIC MATERIALS INTO ELECTRICAL SEMICONDUCTORS, ELECTRO-RESPONSIVE MATERIALS AND USES THEREOF**

(71) Applicant: Universitat Politècnica de Catalunya, 08034 Barcelona (ES); Universita' Degli Studi Di Pavia, 27100 Pavia (IT)
(72) Inventor: GUL, Merve, 08034 Barcelona (ES); FONTANA-ESCARTÍN, Adrián, 08034 Barcelona (ES); ARNAU ROCA, Marc, 08034 Barcelona (ES); SANS MILÀ, Jordi, 08034 Barcelona (ES); LANZALACO, Sonia, 08034 Barcelona (ES); ARMELIN DIGGROC, Elaine, 08034 Barcelona (ES); PÉREZ-MADRIGAL, Maria M., 08034 Barcelona (ES); ALEMÁN LLANSÓ, Carlos, 08034 Barcelona (ES); CHIESA, Enrica, 27100 Pavia (IT); GENTA, Ida, 27100 Pavia (IT)
(74) Representative: TRBL Intellectual Property

(57) **Abstract**

The present invention relates to a method for transforming a dielectric material into an electrical semiconductor, the method comprising a step of treating the dielectric material under an electro-response inducing procedure, wherein the electro-response inducing procedure comprises, in this specific order: an electro-thermal re-orientation treatment; followed by a charged gas activation treatment. The invention also relates to an electrical semiconductor made of a dielectric material, wherein the dielectric material is modified by the method of the invention. Finally, the invention relates to the use of the electrical semiconductor made of a dielectric material in an application that requires an electrical response.

## Description

### FIELD OF THE INVENTION

The present invention relates to the field of electro-responsive materials. More particularly, the invention relates to the field of dielectric materials, which are rendered electrical semiconductors.

### BACKGROUND OF THE INVENTION

The transition from an insulator to an electro-responsive material is becoming a topic of increasing interest. This transition may be achieved by applying external stimuli, capable of modifying the 3D and/or electronic structures of the original insulating materials. Dielectric materials such as insulating polymers or ceramics have been successfully used in this context. In the case of ceramics, advanced ceramics may allow electronic conduction (i.e., passage of free electrons through the material) when certain impurities of differing valence are added as dopants, such that these impurities may act as donors or acceptors of electrons. In the case of dielectric polymers, the transition of insulating to conducting is frequently accomplished by mixing the polymers with other electroactive materials, even though a few physical treatments that induce suitable chemical modifications have also been reported. For example, electro-responsive polymer composites are frequently obtained by combining insulating polymers with intrinsically conducting fillers such as, for example, carbon nanotubes, graphene oxide, metallic nanoparticles and MXene (2D titanium carbide nanosheets). Moreover, the combination of insulating polymers with intrinsically conducting polymers have produced electro-responsive systems, as for example multilayered films, semi-interpenetrated hydrogels, and fibres. In regards physical treatments, WO2023084006 A1 describes an electrochemical sensor made of polylactic acid (PLA), wherein the PLA is modified by means of a low-pressure oxygen plasma. The plasma modified PLA electrodes described therein may be used as electrochemical sensors for the detection of molecules of biological interest (e.g., dopamine and/or glucose). In view of the above, there is an interest in this field to provide a variety of alternative methods capable of transforming insulators into electro-responsive materials.

### BRIEF DESCRIPTION OF THE INVENTION

Against this background, the inventors have found that dielectric materials can be effectively modified into electro-responsive materials by means of synergistically applying an electro-thermal re-orientation treatment followed by charged gas activation. As a specific example, the performance of electrochemical sensors made from dielectric polymers and transformed by the proposed method has been successfully tested in the individual determination of dopamine.

Thus, in a first aspect, the invention refers to a method for transforming a dielectric material into an electrical semiconductor, the method comprising a step of treating the dielectric material under an electro-response inducing procedure, wherein the electro-response inducing procedure comprises, in this specific order:
- an electro-thermal re-orientation treatment; followed by
- a charged gas activation treatment.

In a second aspect, the invention refers to an electrical semiconductor made of a dielectric material, wherein the dielectric material is modified by an electro-response inducing procedure, and wherein the electro-response inducing procedure comprises, in this specific order:
- an electro-thermal re-orientation treatment; followed by
- a charged gas activation treatment.

In a final aspect, the invention refers to the use, in an application that requires an electrical response, of an electrical semiconductor made of a dielectric material, wherein the dielectric material is modified by an electro-response inducing procedure, and wherein the electro-response inducing procedure comprises, in this specific order:
- an electro-thermal re-orientation treatment; followed by
- a charged gas activation treatment.

### DESCRIPTION OF THE DRAWINGS

The foregoing and other features and advantages will be more fully understood from the detailed description of the invention, as well as from examples referring to the attached figures, which are described in the following paragraphs, wherein:
Figure 1: Procedures used to prepare PLA(ET-CA) and PLA(CA-ET) discs. The two specimens only differ in the order used to apply the electro-thermal re-orientation and the charged gas activation treatments.
Figure 2: SEM images showing surface morphology of (a) PLA, (b) PLA(ET-CA), (c) PLA(CA-ET), (d) PLA(ET) and (e) PLA(CA) discs.
Figure 3: XRD patterns of untreated PLA, PLA(ET), and PLA(CA).
Figure 4: (a) FTIR and (b) Raman spectra recorded for untreated PLA, PLA(ET-CA), and PLA(CA-ET); (c) FTIR and (d) Raman spectra recorded for untreated PLA, PLA(ET), and PLA(CA). Dashed lines indicate the characteristic FTIR and Raman peaks of PLA. C-C stretching peaks of the amorphous and crystalline phases, and C-O stretching of oxidized ester bonds are also indicated.
Figure 5: High resolution XPS spectra for untreated PLA, PLA(ET-CA), and PLA(CA-ET): (a) C 1s and (b) O 1s; and high resolution XPS spectra for untreated PLA, PLA(ET), and PLA(CA): (c) C 1s and (d) O 1s.
Figure 6: (a) Cyclic voltammograms for the untreated and treated PLA specimens studied in this work recorded in PBS at a scan rate of 100 mV/s. (b) Cyclic voltammograms for PLA(ET-CA) recorded in PBS at different scan rates. (c) Variation of the current density at the reversal potential against scan rate for PLA(ET-CA).
Figure 7: Variation of the current density at the reversal potential against the square root of the scan rate for PLA(ET-CA).
Figure 8: (a) Procedure used to prepare the samples for the EIS assays. (b) Nyquist and (c, d) Bode plots of untreated PLA, PLA(ET-CA) and PLA(CA-ET). (e) EECs obtained for the studied samples.
Figure 9: Cyclic voltammograms recorded in PBS at different scan rates for: (a) untreated PETG and PETG(ET-CA); and (b) untreated PP and PP(ET-CA) specimens.
Figure 10: (a) CAD design of the 3D-printed PLA specimens. (b) Photograph of a treated PLA specimen coated at one side with a Kapton^{®} tape disc. (c) Photograph of a coated PLA specimen (WE) with the glassy carbon rod connector. (d) Sketch showing the set-up used for the electrochemical detection assays. WE: working electrode; CE: Counter electrode; RE: Reference electrode.
Figure 11: (a) CV curves for PLA(ET-CA) in PBS solutions with increasing DA concentration from 0 to 1000 µM). (b) Calibration plot in PBS (i.e. peak current vs. DA concentration) for a DA concentration interval ranging from 50 to 1000 µM.

### DETAILED DESCRIPTION OF THE INVENTION

As explained above, the inventors have found that dielectric materials can be effectively modified into electro-responsive materials by means of synergistically applying an electro-thermal re-orientation treatment followed by charged gas activation. In addition, they have demonstrated that electrochemical sensors can be effectively manufactured from thermoplastic parts, wherein the thermoplastic parts can be rendered conductive after being subjected to an electro-thermal re-orientation treatment followed by charged gas activation, without the need of incorporating any conductive additives to the sensors at any stage during the manufacturing process. Said electrochemical sensors have been successfully tested in the individual determination of dopamine.

Thus, in a first aspect, the invention relates to a method for transforming a dielectric material into an electrical semiconductor, the method comprising a step of treating the dielectric material under an electro-response inducing procedure, wherein the electro-response inducing procedure comprises, in this specific order:
- an electro-thermal re-orientation treatment; followed by
- a charged gas activation treatment.

In embodiments of the invention, the dielectric material is a polymeric material, a ceramic material or a composite material. In an embodiment, the dielectric material is a ceramic material. In particular embodiments, the dielectric ceramic material is selected from the group consisting of hydroxyapatite and silica. In an embodiment, the dielectric material is a polymeric material. In a particular embodiment, the dielectric material is a thermoplastic polymeric material. In embodiments of the invention, the thermoplastic material is an oxygen-containing thermoplastic polymer or an oxygen-free thermoplastic polymer. In embodiments of the invention, the thermoplastic material may be selected from the group consisting of polylactic acid (PLA), polypropylene (PP), polyethylene terephthalate glycol (PETG), thermoplastic polyurethane (TPU), polyvinyl alcohol (PVA); acrylonitrile butadiene styrene (ABS), nylon-6, nylon-6,6, nylon polymers, nylon blends, BPA polycarbonate, polycarbonates, polyethylene terephthalate (PET), polybutylene terephthalate (PBT), polyhexamethylene terephthalate (PHT), polypropylene terephthalate (PTT), polyesters, polyester amides, and combinations thereof. In the context of the invention, in addition to individual thermoplastic polymers, both mixtures of different thermoplastic polymers and thermoplastic copolymers (obtained from mixtures of monomers) may also be used. That is, different thermoplastic polymers may be each separately manufactured from homogeneous monomer blocks and the polymers may be mixed afterwards, or copolymers may be fabricated as individual plastics obtained from mixtures of monomers. In preferred embodiments, the thermoplastic material is polylactic acid (PLA), polypropylene (PP), or polyethylene terephthalate glycol (PETG). In the context of the invention, the term "polylactic acid", also known as poly(lactic acid) or polylactide (abbreviation PLA) refers to a thermoplastic polyester with backbone formula (C₃H₄O₂)ₙ or [-C(CH₃)HC(=O)O-]ₙ and with CAS number 26100-51-6. In the context of the invention, the term "polypropylene", also known as polypropene (abbreviation PP) refers to a thermoplastic polymer with backbone formula (C₃H₆)ₙ and or [-CH₂-CH(CH₃)-]ₙ and with CAS number 9003-07-0. In the context of the invention, the term polyethylene terephthalate glycol (abbreviation PETG) refers to a thermoplastic polyester with backbone formula (C₁₄H₂₀O₅S) and with CAS number 25640-14-6.

In particular embodiments, the electrical semiconductor made of a dielectric material of the invention is exclusively made of a dielectric part. That is, the electrode of the invention consists of a transformed dielectric material. This means that only a dielectric material is originally used in the fabrication of the electrical semiconductor, without adding any intrinsically conducting components, such as, for example, carbon nanotubes, graphene or conducting polymers. In particular embodiments of the invention, the electric conductor of the invention is exclusively made of polylactic acid (PLA), polypropylene (PP) or polyethylene terephthalate glycol (PETG). That is, the electric conductor of the invention consists of polylactic acid (PLA), polypropylene (PP) or polyethylene terephthalate glycol (PETG). This means that only insulating plastic (PLA), (PP) or (PETG) is originally used in the fabrication of the electric conductor, without adding any intrinsically conducting components, such as, for example, carbon nanotubes, graphene or conducting polymers.

The electrical semiconductor made of a dielectric material by applying the method of the instant invention is given a three-dimensional shape, before or after being subjected to the electro-response inducing procedure. That is, it is a 3D-shaped part. As used in the context of the present invention, the terms "3D-shaped" or "3D-shaping" generally refer to methods capable of giving a material a pre-determined, specific shape. Any suitable method of 3D-shaping known to the skilled person could be used in the context of the instant invention (for example, methods of 3D-shaping that could use a mould or a nozzle). Thus, 3D shaping can be achieved by means of fabrication methods such as 3D printing, 3D moulding, injection, extrusion, chemical polymerisation followed by mould deposition. As used herein, the terms "3D printed" or "3D printing", which in the context of the present invention are used interchangeably with the term "additive manufacturing", refer to a variety of fabrication methods wherein computer-aided-design (CAD) software, 3D object scanners, or similar is used to instruct hardware to deposit material layer upon layer to create a three-dimensional object, in precise geometric shapes. 3D printing is the construction of a three-dimensional object from a CAD model or a digital 3D model. Methods of 3D printing include, but are not limited to, fused deposition modelling (FDM), photo-polymerisation and powder sintering. In a particular embodiment, the electrode is 3D-printed by fused deposition modelling (FDM). Fused deposition modelling (FDM), also known as fused filament fabrication (FFF) or filament freeform fabrication, is a 3D printing process that uses a continuous filament of a thermoplastic material. Filament is fed from a reel through a heated printer extruder head and is deposited onto the growing piece. The print head is moved under computer control (i.e., computer-aided-design CAD) software, 3D object scanners, or similar) to define the printed shape. Usually, the head moves in two dimensions to deposit one horizontal plane, or layer, at a time. The work or the print head is then subsequently moved vertically by a small amount to begin a new layer. As used herein, the term "3D moulding" refers to fabrication methods wherein a liquid or freely flowing material is deposited into a cast. The cast is a negative form of the intended three-dimensional shape of the final object, such that, when the liquid or freely flowing material is allowed to solidify within the cast, the final object adopts the intended shape. In other words, thermoplastic moulding is a reversible moulding process by which pellets of plastic are melt, forced into a mould to assume their final shape, and then quickly cooled to harden. Thermoset material is injected into a hot mould and then cooled to maintain the final shape of the part. The most popular techniques in plastic moulding are rotational moulding, injection moulding, blow moulding, compression moulding, conformation moulding, extrusion moulding, and thermoforming.

As used herein, the term "electro-response inducing procedure" refers to a method wherein the surface of an electrically non-conductive object is modified such that the surface becomes responsive to electrical currents. The procedure is thus responsible for directly transforming a dielectric material into an electro-responsive material, without the need to add any conductive materials, as additives. Thus, the conductive electrode of the invention is obtained by subjecting a dielectric material to a procedure that comprises, in this specific order, an electro-thermal re-orientation treatment, followed by a charged gas activation treatment.

An electro-thermal re-orientation treatment in the context of the invention can be applied by subjecting the material to specific temperature and electrical energy conditions. Thus, the electro-thermal re-orientation process is usually applied using a furnace in combination with a power voltage supply. During this process, the surface of an object made of a dielectric material is simultaneously heated and subjected to a voltage. This combined treatment can modify the ordered structure of the object (i.e., the crystallinity of solid objects) and render the material conductive. In the present invention, the dielectric part is placed between two electrodes attached to a holder inside the furnace. The two electrodes are connected through wires to an external power voltage supply. The dielectric part is pre-heated to a pre-defined temperature. Then, a voltage is applied while the temperature is maintained. Finally, the dielectric part is cooled down at room temperature. In a particular embodiment, the two electrodes placed in the holder are made of stainless steel. In a particular embodiment, the holder is a ceramic holder. In a particular embodiment, the wires are made of platinum (Pt).

In embodiments of the invention, the electro-thermal re-orientation treatment is applied at a temperature between 80-1400°C. Generally, the pre-defined temperature considers the glass transition temperature, the melting temperature and the decomposition temperature of the dielectric material. However, the temperature ranges may be significantly different when the dielectric material is a ceramic or when the dielectric material is a thermoplastic polymer. Thus, in particular embodiments of the invention where the dielectric material is a ceramic, the furnace is pre-heated at a temperature from 140 to 1400°C. In embodiments of the invention, where the dielectric material is silica, the furnace is pre-heated at 140 to 160°C, preferably at 150°C. In embodiments of the invention, where the dielectric material is hydroxyapatite, the furnace is pre-heated at 900 to 1400°C, or 1000 to 1300°C, preferably at 1000°C, 1050°C, 1100°C, 1150°C, 1200°C, 1250°C, or 1300°C. On the other hand, in particular embodiments of the invention where the dielectric material is a thermoplastic polymer, the furnace is pre-heated at a temperature from 80 to 130°C, from 90 to 120°C, or from 100 to 110°C. In embodiments of the invention, the furnace is heated at 80, 90, 100, 110, 120 or 130°C. In a particular embodiment, the furnace is heated at 100 °C. In embodiments of the invention, the furnace is pre-heated for a duration of 8 min, 9 min, 10 min, 11 min, or 12 minutes. In a particular embodiment, the furnace is pre-heated for a duration of 10 minutes. In embodiments of the invention, the applied voltage ranges from 100 to 1000 V, from 250 to 900 V, from 200 to 800 V, from 300 to 700 V, or 400 to 600 V. In particular embodiments, the applied voltage is of 400, 420, 440, 460, 480, 500, 520, 540, 560, 580, or 600 V. In a particular embodiment, the applied voltage is of 500 V. In particular embodiments, the applied voltage is supplied for a duration of 30-90 mins., of 40-80 mins., of 50-70 mins., or of 55-65 minutes. In particular embodiments of the invention, the applied voltage is supplied for a duration of 30, 35, 40, 45, 50, 55, 60, 65, 70, 75, 80, 85, or 90 mins. In a specific embodiment, the applied voltage is supplied for a duration of 60 mins. In particular embodiments, the 3D-shaped electrodes are cooled down for a duration from 5 to 15 min, from 7 to 13 min, from 9 to 11minutes. In particular embodiments, the 3D-shaped dielectric parts are cooled down for a duration of 10 minutes

A charged gas activation process can be generated by applying energy (e.g., electrical energy) to a gas or gas mixture. Upon exposure of a gas or gas mixture to an electrical energy source, the gas molecules are ionized, leading to a highly electrically conductive gas which can interact with any surface. This process refers to a procedure wherein the surface of an object is placed in contact with the highly electrically conductive gas such that this ionized gas (i.e., highly electrically conductive gas) is capable of modifying the surface of the object. A charged gas activation process is usually performed in a chamber or enclosure that is evacuated under vacuum conditions so that air within the chamber or enclosure is pumped out prior to letting in any gas or gas mixture. The gas then flows into the chamber or enclosure at a pre-defined pressure. The process is carried out before any electrical energy is applied. The effect of the charged gas activation process on the surface of an object can be finely tuned by adjusting parameters such as the composition and/or pressure of the gas or gas mixture, the time of exposure of the surface to the highly electrically conductive gas, and the power discharge.

In the context of the instant invention, the gas or gas mixture could be oxygen, air (as a mixture of oxygen: nitrogen), and nitrogen. Thus, in a particular embodiment, the gas or gas mixture in the charged gas activation process is oxygen. In a more particular embodiment, the gas or gas mixture in the charged gas activation process is a low oxygen pressure gas. In a more particular embodiment, the gas or gas mixture in the charged gas activation process is a low oxygen pressure gas, wherein the low oxygen pressure is an oxygen pressure between 0.2 and 1.0 mbar, preferably wherein the oxygen pressure is of at least 0.4, of at least 0.6, or of at least 0.8 mbar, more preferably wherein the oxygen pressure is at least 0.8 mbar. In particular embodiments, the surface of the object (i.e., the surface of the dielectric part) is treated under charged gas activation process for a duration of 1-300 seconds, of 10-240 seconds, of 50-180 seconds, or of 100-120 seconds. In more particular embodiments, the surface of the object (i.e., the surface of the dielectric part) is treated under charged gas activation process for a duration of 1 second, 2 seconds, 3 seconds, 4 seconds, 5 seconds, 6 seconds, 7 seconds, 8 seconds, 9 seconds, 10 seconds, 12 seconds, 15 seconds, 20 seconds, 25 seconds, 30 seconds, 40 seconds, 50 seconds, 60 seconds, 70 seconds, 80 seconds, 90 seconds, 100 seconds, 110 seconds, 120 seconds or more than 120 seconds. In particular embodiments, the power discharge is of 50 to 500 W, of 60 to 400 W, of 70 to 300 W, of 80 to 200 W, or of 100 to 120 W, preferably of 100 to 120 W, more preferably of 100 W.

The application of an electro-thermal re-orientation process followed by a charged gas activation process results in a modification of the surface morphology and properties of the object (i.e., the dielectric part) such as wettability. The effects of both processes are directly responsible for transforming the dielectric material (i.e., the dielectric part) into an electro-responsive material without the need to add any conductive materials.

In another aspect, the invention relates to an electrical semiconductor made of a dielectric material, wherein the dielectric material is modified by an electro-response inducing procedure, and wherein the electro-response inducing procedure comprises, in this specific order:
- an electro-thermal re-orientation treatment; followed by
- a charged gas activation treatment.

The electrical semiconductor made of a dielectric material is obtained by a method as per the first aspect of the invention, wherein a dielectric material is treated under an electro-response inducing procedure, as explained above. In embodiments of the invention, the dielectric material is a polymeric material, a ceramic material or a composite material. In particular embodiments, the dielectric material is selected from the group consisting of hydroxyapatite, silica, polylactic acid (PLA), polypropylene (PP), polyethylene terephthalate glycol (PETG), thermoplastic polyurethane (TPU), polyvinyl alcohol (PVA); acrylonitrile butadiene styrene (ABS), nylon-6, nylon-6,6, nylon polymers, nylon blends, BPA polycarbonate, polycarbonates, polyethylene terephthalate (PET), polybutylene terephthalate (PBT), polyhexamethylene terephthalate (PHT), polypropylene terephthalate (PTT), polyesters, polyester amides, and combinations thereof. The dielectric material may be provided as a dielectric part. As used herein, the term "part" refers to a piece of dielectric material which is given a 3D shape that is appropriate for the intended use. In particular embodiments of the preparation method of the invention, the dielectric part is provided by any suitable method of 3D-shaping known to the skilled person.

In a further aspect, the invention refers to the use, in an application that requires an electrical response, of an electrical semiconductor made of a dielectric material, wherein the dielectric material is modified by an electro-response inducing procedure, and wherein the electro-response inducing procedure comprises, in this specific order:
- an electro-thermal re-orientation treatment; followed by
- a charged gas activation treatment.

In the context of the invention, an application that requires an electrical response refers to uses related to bioelectronics and/or organic electronics. Examples of such applications include electrodes in sensors (i.e., analyte detection), cell biostimulation, electrotherapy (i.e., electrostimulation-controlled drug release and electro-regeneration of tissues), biomedical tools (i.e. pacemakers, catheters, etc.), components of biocapacitors, supercapacitors, and/or batteries, smart textiles, electromagnetic shielding, polymer-based membranes, plastic electrical cables (i.e., cables that are not susceptible to corrosion).

In a particular embodiment of the invention, the electrical semiconductor made of a dielectric material, modified by the method of the invention is used in the preparation of an electrode. That is, in an embodiment, the electrical semiconductor made of a dielectric material is an electrode.

In the context of the present invention, the term "electrode" refers to an electrical semiconductor that makes contact with the non-metallic parts of a circuit, such as an electrolyte. In a particular embodiment of the invention, the electrode of the invention is generally intended for use as an electrochemical sensor. Thus, in a particular embodiment, the electrode is an electrochemical sensor. As used herein, "electrochemical sensors" are a class of chemical sensors in which an electrode is used as a transducer element in the presence of an analyte, such that the electrochemical sensors convert the information associated with electrochemical reactions (the reaction between an electrode and an analyte) into a qualitative or quantitative signal. It follows that the electrodes of the invention are suitable for use in electroanalytical methods, which are chemistry techniques wherein analytes are studied by measuring the potential (volts) and/or current (amperes) in an electrochemical cell containing the analyte. There are different types of electroanalytical method depending on which parameters of the cell are controlled (i.e., fixed) and which parameters are measured. The main categories are potentiometry (the difference in electrode potentials is measured), coulometry (the cell's current is measured over time), and voltammetry (the cell's current is measured while actively alternating the cell's potential).

In particular embodiments, the electrodes of the invention are used in amperometric/ voltammetric techniques. As used herein amperometry/ voltammetry are electrochemical techniques wherein information about an analyte is obtained by measuring the current as a function of the applied potential. In the context of the present invention, the methods of electrochemical detection can be, but are not limited to, cyclic voltammetry (CV), linear sweep voltammetry (LSV), chronoamperometry (CA), differential pulse voltammetry (DPV), and square wave voltammetry (SWV). Amperometric/ voltammetric techniques are conducted in a setup with at least two electrodes. Modern amperometric/ voltammetric techniques typically use a three-electrode system comprising a working electrode, a reference electrode, and an auxiliary electrode. The working electrode is in contact with the analyte, applies the desired potential in a controlled way and facilitates the transfer of change to and from the analyte. The electrode of the invention can be used as a working electrode in a three-electrode setup. The reference electrode is a half cell with a known reduction potential, which simply acts as reference in measuring and controlling the working electrode's potential but does not pass any current. In the context of the invention, the reference electrode can be, but is not limit to, an Ag | AgCl (KCl, 3M) electrode. Other reference electrodes such as standard hydrogen electrode (SHE) and saturated calomel electrode (SCE) can also be used. The auxiliary electrode passes all the current needed to balance the current observed at the working electrode. In the context of the invention, the auxiliary electrode can be, but is not limited to, a platinum wire. Other auxiliary electrodes fabricated from an electrochemically inert material (e.g. gold, platinum or carbon) can be also used. Thus, in particular embodiments, the electrode of the invention is in electrical contact with at least one secondary electrode for connecting to an electrochemical setup. This secondary electrode is also known as a connector. The secondary electrode is not in direct contact with the solution containing the analyte to be assayed. The at least one secondary electrode is an electrode selected from the group consisting of glassy carbon electrode (GCEs), electrodes based on carbon paste, electrodes prepared from graphite powder and mineral oil, electrodes based on stainless steel, nickel, silver, gold, and/or platinum, and combinations thereof. In particular embodiment, the electrode is in electrical contact with at least a glassy carbon electrode (GCEs) for connecting to an electrochemical setup.

Thus, the invention relates to the use of an electrical semiconductor made of a dielectric material as an electrode, and particularly as an electrode to be used as an electrochemical sensor. In particular embodiments of the invention, the electrode of the invention is used as an electrochemical sensor for the detection of a single analyte, or for the multiplexed detection of two or more analytes. In particular embodiments, the 3D-shaped electrode of the invention is used as an electrochemical sensor for the detection of at least 1, at least 2, at least 3, at least 4, at least 6, at least 7, at least 8, at least 9, at least 10 or more analytes. In particular embodiments, the 3D-shaped electrode of the invention is used as an electrochemical sensor for the detection of 1, 2, 3, 4, 5, 6, 7, 8, 9, 10 or more analytes. The 3D-shaped electrodes of the invention can be used as an electrochemical sensor for the detection of analytes such as dopamine, glucose, lactate, serotonin, urea, uric acid, aspartic acid, NADH (nicotinamide adenine dinucleotide), insulin and other analytes with redox properties. In a particular embodiment, the 3D-shaped electrode of the invention is used as an electrochemical sensor for the detection of dopamine. As used herein, dopamine (DA), also known as 3,4-dihydroxyohenethylamine, is a neurotransmitter of formula (1).

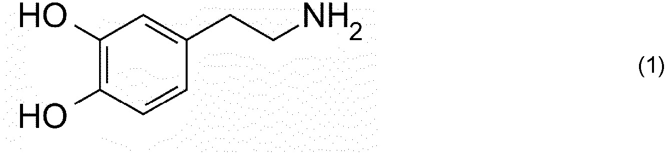

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice. Furthermore, any of the parametric ranges and/or single values of temperature (T), time (t), pressure (P), and the like described in the examples can be used, in different embodiments of the invention, in isolation or in combination.

### EXAMPLES

The following invention is hereby described by way of the following examples, which are to be construed as merely illustrative and not limitative of the scope of the invention.

### Example 1 - Preparation of an electrochemical sensor

### 1.1 - Thermoplastic dielectric materials

Different types of thermoplastics samples were used for the synthesis of electrodes. These thermoplastics were used in a filament shape for 3D printing and purchased from BCN3D (Spain), including PLA (supplied by MCPP Netherlands BV), PP (Ultrafuse^{®} PP, supplied by BASF 3D Printing Solutions BV) and PETG (supplied by MCPP Netherlands BV).

Thermoplastic filaments (PLA, PP y PETG) were shaped using a BCN3D SIGMAX R19 3D printer equipment. Nozzles with a 0.3 mm of diameter were used for all the samples, whereas the printing temperature was set between 220 and 240 °C, depending on the filament, the printing speed at 30 mm/s and the filling density at 100 %. The samples were designed with Cura Software and thermoplastic filaments were shaped into discs with a diameter and a height of 13 mm and 0.5 mm, respectively. All printed samples were cleaned with deionized water three times for removing the micro-residues before any further treatment.

### 1.2 - Transformation into electro-responsive materials

3D-printed thermoplastic discs were modified by two different treatments, in order to transition from an insulator to an electro-responsive material:
- *Electro-thermal re-orientation (ET):* the electro-thermal re-orientation treatment was applied using a furnace and a power voltage supply simultaneously. PLA samples were placed between two stainless steel (AISI 304) electrodes placed in a ceramic holder inside the furnace. The steel electrodes were connected through Pt wires to an external power voltage supply, which applied a voltage to the samples heated at a pre-defined temperature. Considering the glass transition temperature, the melting temperature, and the decomposition temperature of PLA (T_{g} = 60 °C, Tₘ = 150 °C and T_{d} = 290 °C-380 °C, respectively), the furnace was pre-heated at 100 °C for 10 minutes Then, a voltage of 500 V was applied for 1 h maintaining the temperature at 100 °C. Finally, samples were cooled down during 10 min at room temperature. The same operational parameters were applied to PP and PETG samples.
- *Charged gas activation (CA):* for this treatment, the samples (PLA, PP or PETG) were placed within a vacuum-purged chamber that was firstly evacuated and, subsequently, filled with oxygen until reaching a pressure of 0.8 mbar. After that, an electrical jolt was applied during 2 min using a power of 100 W.

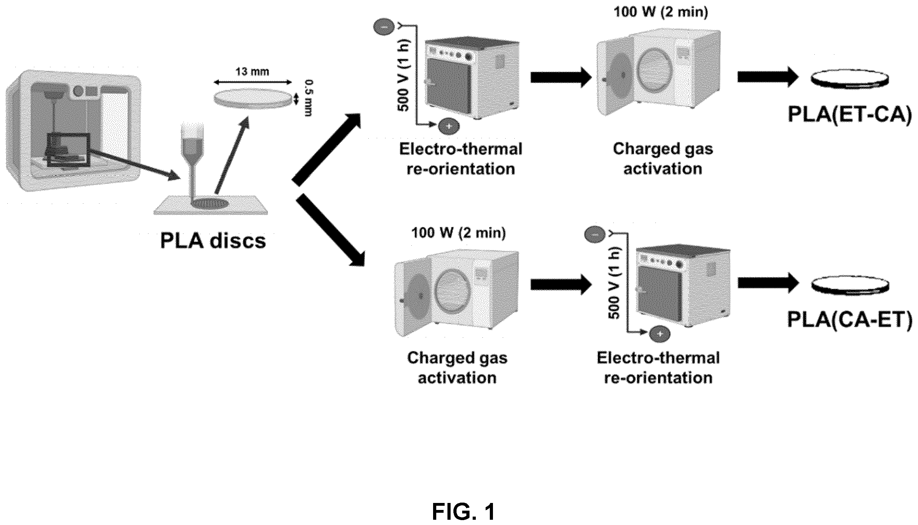

The treatments were carried out using two different approaches, differing only in the order in which the two treatments were applied to transform the dielectric materials into conducting materials (Figure 1):
- *(ET-CA) approach:* the discs were subjected to the electro-thermal (ET) re-orientation and, subsequently, the charged gas activation (CA) treatment was applied to the resulting material.
- *(CA-ET) approach:* the discs were subjected to charged gas activation, which was applied first. This treatment was followed by electro-thermal re-orientation.

### Example 2 - Structural characterisation of treated materials

The effect of the above treatments (electro-thermal re-orientation (ET) and charged gas activation (CA)) on the structure of PLA has been studied for a better understanding of the chemical changes produced on the material.

### 2.1 Surface and chemical characterisation methods

The following characterisation methods have been used:
- Scanning electron microscopy (SEM) studies were performed in a Focused Ion Beam Zeiss Neon 40 microscope equipped with a SEM GEMINI column with a Shottky field emission and an EDX spectroscopy system. Samples were sputter-coated with a thin layer of carbon to prevent sample charging problems and were immobilized over metallic pins with carbon-based stickers.
- Water contact angle (WCA) measurements were performed using a Kruss GmbH device. The sessile drop method was employed for all samples at room temperature and humidity. Raw data was processed using the software ADVANCE. For reproducibility, the average WCA was obtained by considering at least 10 independent samples for each material.
- X-ray diffraction (XRD) intensities of untreated and treated PLA samples were collected using a Bruker D8 Advance diffractometer with one-dimensional Lynx Eye detector and monochromatized Cu-K_{α} radiation. The 2θ measurement ranged from 5 ° to 60 °.
- FTIR spectra were recorded on a FTIR Jasco 4100 spectrophotometer through an attenuated total reflection accessory (Top-plate) with a diamond crystal (Specac model MKII Golden Gate Heated Single Reflection Diamond ATR). Samples were evaluated using spectra manager software and, for each sample, 64 scans were performed between 4000 and 600 cm-1 with a resolution of 4 cm-1. FTIR spectra were normalized with respect to the most intense band (C=O stretching).
- Raman spectra were obtained using the inVia Qontor confocal Raman microscope (Renishaw) equipped with a Renishaw Centrus 2957T2 detector and a 785 nm laser. The exposure time was 0.5 s, the laser power was adjusted to 1% of its nominal output power, and each spectrum was collected with 6 accumulations. Raman spectra were normalized with respect to the most intense band (874 nm).
- X-ray photoelectron spectroscopy (XPS) analyses were performed on a SPECS Surface Nano Analysis system (GMbH, Berlin, Germany). The spectrometer was equipped with a high-intensity twin-anode X-ray source XR50 of Mg/AI (1253 eV/ 1487 eV) operating with the Al anode at 150 W, placed perpendicular to the analyser axis, and using a Phoibos 150 MCD-9 XP detector. The position of the stage was digitally controlled to ensure that the spot was in the same exact place during the whole treatment. The pass energy of the hemispherical analyser was set at 25 eV, while the energy step of high-resolution spectra was set at 0.1 eV. The pressure in the analysis chamber was always below 10-7 Pa, and binding energy (BE) values were referred to the C 1s peak at 284.5 eV. Data were processed with the CasaXPS software (Casa Software Ltd., UK).

### 2.2 Surface and chemical characterisation of PLA treated discs

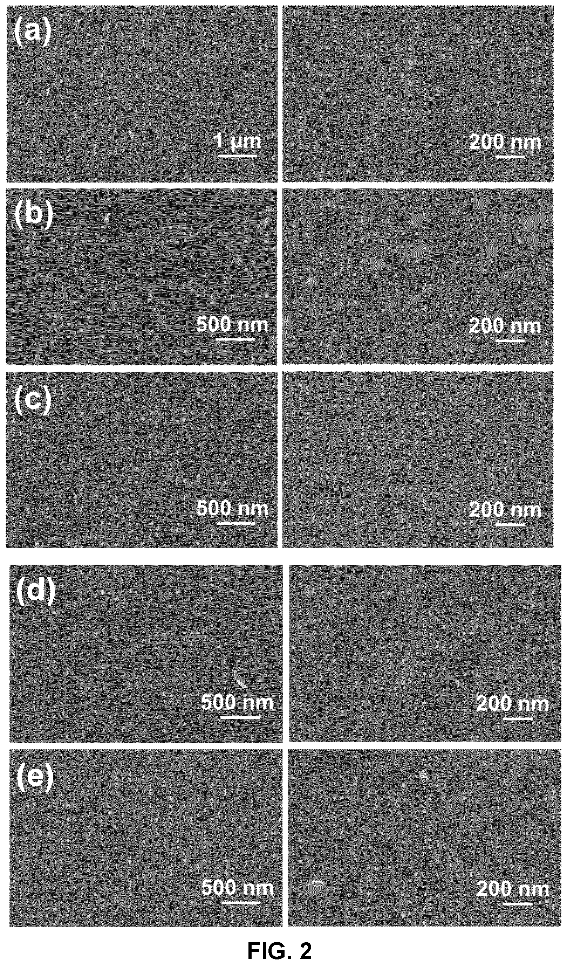

Morphological characterisation of PLA, PLA(ET-CA) and PLA(CA-ET) surfaces was performed using SEM (Figure 2). As it can be seen, the homogeneous and smooth surface of PLA (Figure 2a) was converted into a heterogeneous rough surface in PLA(ET-CA) (Figure 2b), while the surface of PLA(CA-ET) (Figure 2c) was similar to that of untreated PLA. These features suggest that the charged gas activation treatment has a higher impact on the morphology of PLA than the electro-thermal re-orientation process, as is confirmed by displays of the surface of morphology of PLA discs subjected to charged gas activation (Figure 2d) and electro-thermal re-orientation (Figure 2e) alone (hereafter those specimens are denoted PLA(CA) and PLA(ET), respectively). In fact, results suggest that both treatments affect surface roughness. The charged gas activation increases the surface roughness, while the electro-thermal re-orientation decreases it, although the effect of the latter treatment is more pronounced than that for former ones.

In addition to the changes in surface morphology, the electro-thermal and charged gas activation processes affected the surface wettability. Comparison of the WCA values determined for untreated PLA, PLA(ET-CA), PLA(CA-ET), PLA(CA) and PLA(ET) discs are listed in Table 1. As it can be seen, PLA is a nearly hydrophobic material with WCA = 79.2° ± 3.3°. The hydrophilicity of the PLA(CA-ET) and, especially, PLA(ET-CA) is higher than the one of pristine PLA, the WCA decreasing by around 18% and 49%, respectively. This feature is consistent with the morphological changes observed in Figure 2, which were significantly higher for PLA(ET-CA) than for PLA(CA-ET). Furthermore, inspection of the WCA values obtained for PLA(CA) and PLA(ET) also confirmed that the effect of charged gas activation alone was higher than the effect due to the electro-thermal process (Table 1).

**Table 1 - Water contact angle (WCA, in °) determined for the untreated and treated PLA discs (n > 10)**

| **Disc** | **WCA (°)** |
|---|---|
| PLA | 79.2 ± 3.3 |
| PLA(ET-CA) | 40.7 ± 4.3 |
| PLA(CA-ET) | 65.3 ± 5.9 |
| PLA(ET) | 60.7 ± 3.2 |
| PLA(CA) | 52.3 ± 6.3 |

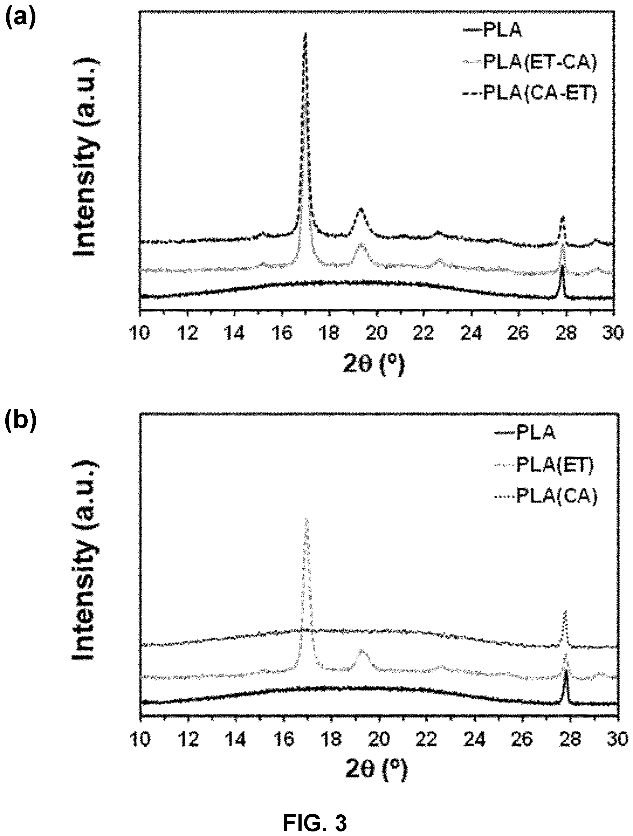

The X-ray diffraction pattern of untreated PLA exhibits a diffuse hump centred at 2θ ≈18°, which indicates its semicrystalline structure, and a small sharp peak at 2θ = 28.0°, which corresponds to the β-crystalline form. However, both PLA(ET-CA) and PLA(CA-ET) specimens display intense sharp peaks at 2θ = 16.8° and 19.2°, which have been associated with the diffraction planes (110) / (200) and (203), respectively, which are characteristic of the α crystalline form. Interestingly, such peaks are slightly more intense for PLA(CA-ET) than for PLA(ET-CA); hence the electro-thermal treatment played a crucial role in such structural conversion (Figure 3a). This hypothesis was confirmed by the X-ray diffraction patterns of PLA(ET) and PLA(CA) samples (Figure 3b). While PLA(CA) samples display a diffuse hump centred practically identical to that obtained for untreated PLA, the hump disappears in PLA(ET) discs, which evidences the conversion of PLA to the α-crystalline phase.

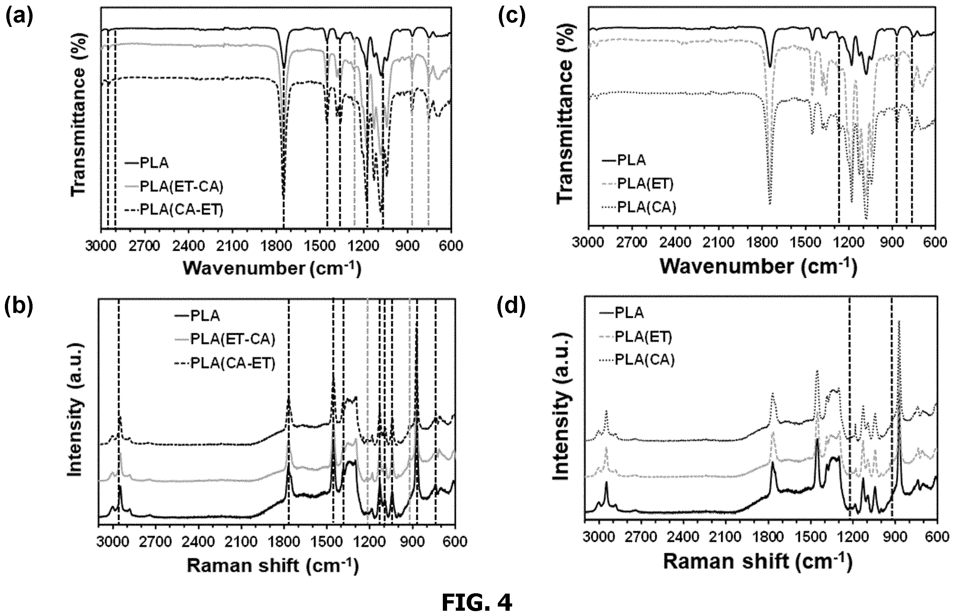

Normalized FTIR spectra for untreated PLA, PLA(ET-CA), and PLA(CA-ET) are displayed in Figure 4a. All samples exhibit the characteristic peaks of PLA at 2998 and 2948 cm⁻¹ (asymmetric and symmetric C-H stretching of CH3, respectively), 1749 cm⁻¹ (C=O stretching), 1451 and 1361 cm⁻¹ (-CH3 asymmetric and symmetric bending, respectively), 1182 cm⁻¹ (C-O stretching), 1079 cm⁻¹ (-C-O-C stretching in esters), and 867 and 750 cm⁻¹ (C-C stretching of amorphous and crystalline phases, respectively). It is worth noting that the intensities of the C-C stretching peaks ascribed to the amorphous and crystalline phases (Figure 4a) are similar for untreated PLA, whereas the latter is significantly more intense than the former for PLA(ET-CA) and PLA(CA-ET). This feature indicates that the charged gas activation and, especially, the electro-thermal re-orientation promote the crystallinity of the samples, as is proved in the FTIR spectra recorded for PLA(CA) and PLA(ET) (Figure 4c). Furthermore, the small shoulder at 1265 cm⁻¹ (Figure 4a), which is weak for untreated PLA, becomes more intense for PLA(ET-CA) and PLA(CA-ET), suggesting that the charged gas activation process oxidizes the C-O bonds at the surface (Figure 4c).

Figure 4b compares the Raman spectra obtained for untreated PLA, PLA(ET-CA) and PLA(CA-ET) discs. Untreated PLA samples show characteristic peaks at 3001-2882 cm⁻¹ (C-H stretching modes of CH3), 1788 cm⁻¹ (C=O groups), 1454 and 1383 cm⁻¹ (asymmetric and symmetric CH3 deformation mode, respectively), 1128 cm⁻¹ (CH3 asymmetric groups), 1094 cm⁻¹ (symmetric C-O-C), 1044 cm⁻¹ (C-CH3 stretching), 874 cm⁻¹ (C-COO vibration) and 742 cm⁻¹ (O-C=O in plane bending). The Raman spectra of PLA(ET-CA) and PLA(CA-ET) displays additional peaks at 1212 and 916 cm⁻¹ (Figure 4b), which are attributed to changes at the surface of PLA. Inspection of the Raman spectra recorded for PLA(ET) and PLA(CA) indicates that the origin of such peaks is caused by the electro-thermal treatment (Figure 4d). As previously investigated, the peak located around 1212 cm⁻¹ appears for polarized α'-forms of PLA, illustrating changes in the amorphous and crystalline orientation as a function of processing conditions.

In order to better understand the effects of the charged gas activation and the electro-thermal re-orientation on the chemical composition of PLA, XPS analyses were performed for untreated PLA, PLA(ET-CA), PLA(CA-ET), PLA(ET) and PLA(CA) specimens. Table 2 reports the atomic percentage of C and O elements detected by XPS for all the samples investigated, before and after treatments. The carbon-to-oxygen ration (C/O) provides a measure of the changes in the composition induced by the different processes. The charged gas activation caused a drastic decrease in the C/O ratio from 1.6 for the untreated PLA to 0.7 for PLA(CA), while this variation was slightly lower for PLA(ET) with a C/O ratio of 0.9. Interestingly, the latter value is preserved for PLA(CA-ET), indicating that the effects of electro-thermal re-orientation, which is applied last, prevail over those induced by the charged gas activation treatment, which is applied first. Instead, the C/O ratio decreases to 0.5 for PLA(ET-CA), evidencing the synergistic effects in terms of induced chemical transformation between the electro-thermal re-orientation process and the charged gas activation when applied in this order.

**Table 2 - Atomic composition (in %) calculated from XPS spectra and carbon-to-oxygen ratio**

| | **PLA** | **PLA(ET-CA)** | **PLA(CA-ET)** | **PLA(ET)** | **PLA(CA)** |
|---|---|---|---|---|---|
| C 1s | 61.4 | 33.0 | 48.2 | 46.4 | 43.6 |
| O 1s | 38.6 | 67.0 | 51.8 | 53.6 | 57.4 |
| C / O | 1.6 | 0.5 | 0.9 | 0.9 | 0.7 |

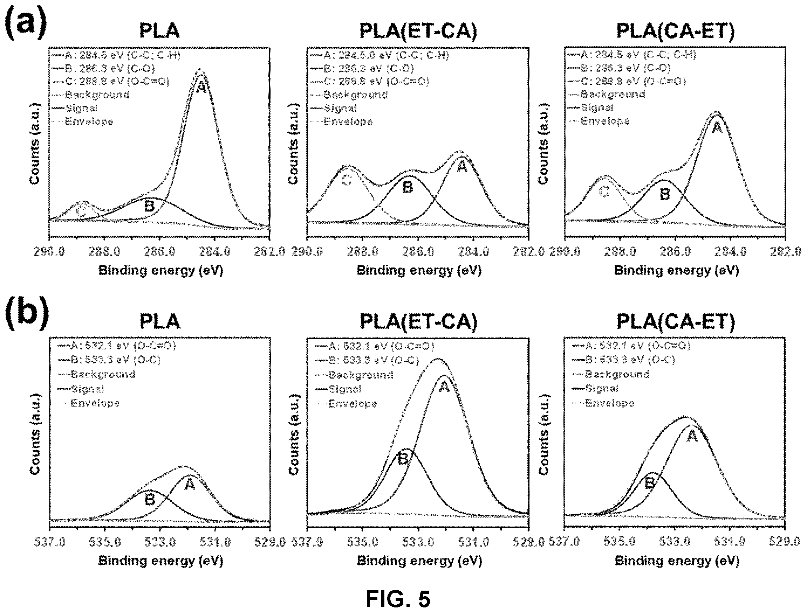

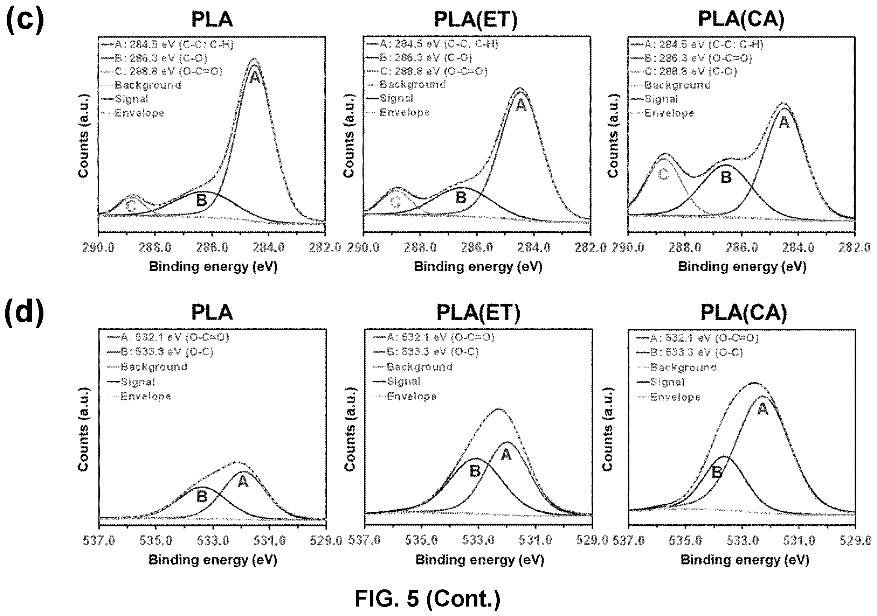

High resolution deconvoluted XPS spectra of the C 1s and O 1s peaks for untreated PLA, PLA(ET-CA), and PLA(CA-ET) are displayed in Figures 5a and 5b, while the spectra for PLA(ET) and PLA(CA) are provided in Figures 5c (C 1s) and 5d (O 1s). Table 3 shows the functional group composition as obtained from the deconvolution of the C 1s and O 1s peaks. In all cases, deconvolution of the C 1s signal led to three contributing curves centred at 284.5, 286.3 and 288.8 eV, that were attributed to C-C / C-H bonds, C-O single bonds and O-C=O bonds, respectively (Figures 5a, 5c).

**Table 3 - Functional group composition (in %) as obtained from the deconvolution of the C 1s and O 1s peaks**

| | **PLA** | **PLA(ET-CA)** | **PLA(CA-ET)** | **PLA(ET)** | **PLA(CA)** |
|---|---|---|---|---|---|
| | **C 1s** | | | | |
| A: C-C/C-H | 74.5 | 30.4 | 57.0 | 69.4 | 49.4 |
| B: C-O | 19.4 | 37.8 | 23.5 | 21.3 | 21.9 |
| C: O-C=O | 6.1 | 31.8 | 19.5 | 9.3 | 28.7 |

| | **O 1s** | | | | |
|---|---|---|---|---|---|
| A: O-C=O | 57.1 | 71.8 | 73.8 | 52.2 | 73.9 |
| B: C-O | 42.9 | 28.2 | 26.2 | 47.8 | 26.1 |

While the contribution of the C-C / C-H peak is much higher than the contributions of C-O and O-C=O peaks for untreated PLA samples (Table 3), it becomes significantly weaker for PLA(CA-ET) and, especially, PLA(ET-CA) specimens (i.e. its contribution decreases by 17.5% and 44.1%, respectively). Instead, the contribution of the O-C=O peak, which was the weakest for untreated PLA (6.1%), experienced the largest relative increment after treatment, increasing 3.2 and 5.2 times for PLA(CA-ET) and PLA(ET-CA), respectively. The contribution of the C-O peak also experienced an increase upon treatment, even though it was moderate with respect to that observed for the O-C=O peak (i.e. 1.2 and 1.9 times for PLA(CA-ET) and PLA(ET-CA), respectively). After evaluating the results obtained for PLA(ET) and PLA(CA), changes in the chemical composition were confirmed to be greater for the charged gas activation than for the electro-thermal re-orientation (Figure 5c).

Deconvolution of the O 1s signal led to two contributing curves centred at 532.1 and 533.3 eV, which were ascribed to O-C=O bonds and O-C single bonds, respectively (Figures 5b and 5d). While the differences in contribution of these two deconvoluted peaks were relatively similar for untreated PLA and PLA(ET) (Table 3), the O-C=O peak was clearly predominant for the rest of the samples (i.e. 3 to 1 ratio), supporting previous discussion about the greater impact of the charged gas activation on the chemical composition.

### Example 3 - Electrochemical characterisation of the sensor

3D printed PLA specimens were prepared in the shape of discs of 13 mm in diameter and 0.5 mm in thickness in order to assay electrochemical performance by means of cyclic voltammetry (CV) and electrochemical impedance spectroscopy (EIS).

### 3. 1 - Electrochemical characterisation methods

- Cyclic voltammetry (CV) assays were performed with an Autolab VIONIC (Metrohm) potentiostat-galvanostat, which was controlled with the Intello software. A standard three electrode cell was used to evaluate the electrochemical response of the studied samples. The untreated and treated 3D printed samples were employed as the working electrode (WE), while the counter electrode (CE) and reference electrode (RE) were a platinum wire and Ag | AgCl (KCI, 3 M) electrode, respectively. The electrochemical cell was filled with 5 mL of a phosphate buffered saline (PBS) solution (pH 7.4), which was used as electrolytic medium. The initial and final potential were -0.90 V, while the reverse potential was +0.90 V. In general, the scan rate was fixed at 100 mV/s, even though some specific experiments were performed using other scan rates, as is explicitly indicated in the next section. For observing the reproducibility of results, three independent samples of each specimen were tested. All assays were performed at room temperature.
- Electrochemical impedance spectroscopy (EIS) was carried out to evaluate the bulk resistance changes of PLA 3D-printed discs. For this purpose, three set of materials were assayed:
   (i) untreated PLA (control);
   (ii) samples treated applying first charged gas activation (CA) and then electro-thermal re-orientation (ET); and
   (iii) samples treated applying first electro-thermal re-orientation (ET) and then charged gas activation (CA) (i.e. reverse treatment with respect to (ii)).
   The experiments were conducted in a three-electrode cell configuration and using a VIONIC (Metrohm) potentiostat-galvanostat, equipped with INTELLO software (Autolab). The electrolyte was the same than that used in CV assays. The operating conditions were fixed to a sinusoidal voltage of 10 mV of amplitude, within a frequency range between 100 MHz and 0.1 Hz. PLA 3D-printed discs (untreated or treated), with reduced height (0.5 mm), were used as WE (area of 1.33 cm2) and were previously sputtered with a conductive layer of Au on the back side before analysis. Pt wire was employed as CE, whereas Ag|AgCl (KCI 3M) was used as the RE. After data collection, EIS results were then processed and fitted to an electrical equivalent circuit (EEC) by using the INTELLO software. At least 3-4 replicates for each sample were tested to ensure reproducibility.

### 3.2 Electrochemical characterisation of PLA treated discs

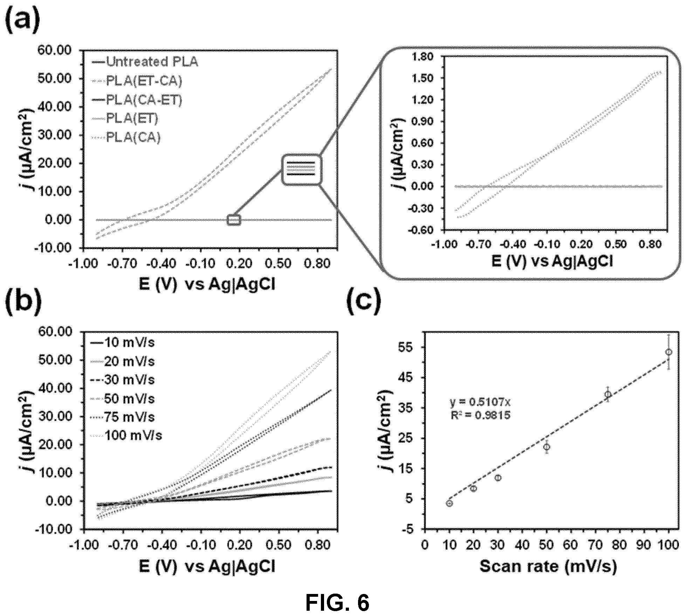

The electrochemical behaviour of untreated PLA, PLA(ET-CA), PLA(CA-ET), PLA(ET), and PLA(CA) was investigated by CV using PBS as electrolytic medium. The voltammograms recorded at a scan rate of 100 mV/s, which are shown in Figure 6a, indicate that PLA(ET-CA) and PLA(CA) are the only specimens with electrochemical response, even though the electroactivity (i.e. the area of the voltammogram) is much higher for the former than for the latter. In the case of PLA(ET-CA) the current density increased from -5.1 to +53.4 µA/cm² when the potential was scanned from -0.90 V to +0.90 V, while the current density increased from -0.3 to +1.6 pA/cm² for PLA(CA) when the same potential interval was swept (Figure 6a, right). Hence, although the electro-thermal re-orientation process does not provide electrochemical response, it becomes essential to enhance the electrochemical activity given by the charged gas activation treatment. Accordingly, the latter is much effective when the α-crystalline phase appears (probably at the surface) as a consequence of the previous electro-thermal re-orientation step. In contrast, this synergistic effect was not detected in PLA(CA-ET) samples, in which the two processes were applied with opposite order. In this case, the electro-thermal re-orientation inhibited the electrochemical response imparted by the charged gas activation.

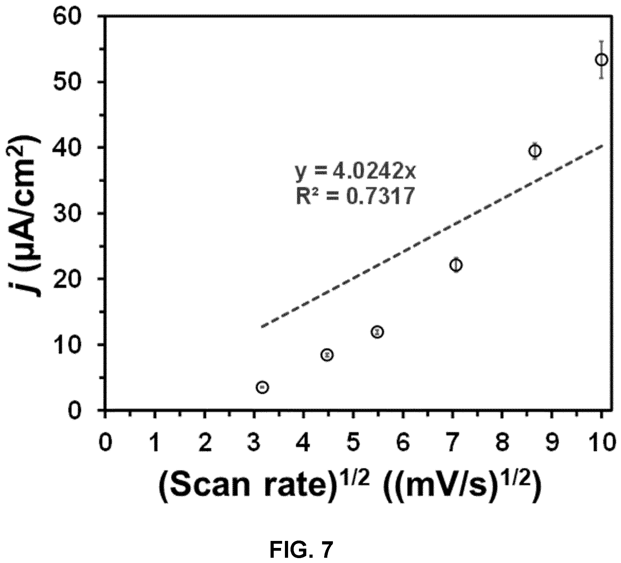

Cyclic voltammograms recorded for PLA(ET-CA) at different scan rates (from 10 to 100 mV/s) in PBS show that the current increases with the scan rate (Figure 6b). Since the current at the reversal potential does not vary linearly against the square root of the scan rate (Figure 7), the charge transfer processes do not involve freely diffusion redox species. However, its linear variation against the scan rate (Figure 6c) indicates that the charge transfer can be ascribed to species present on the electrode-surface.

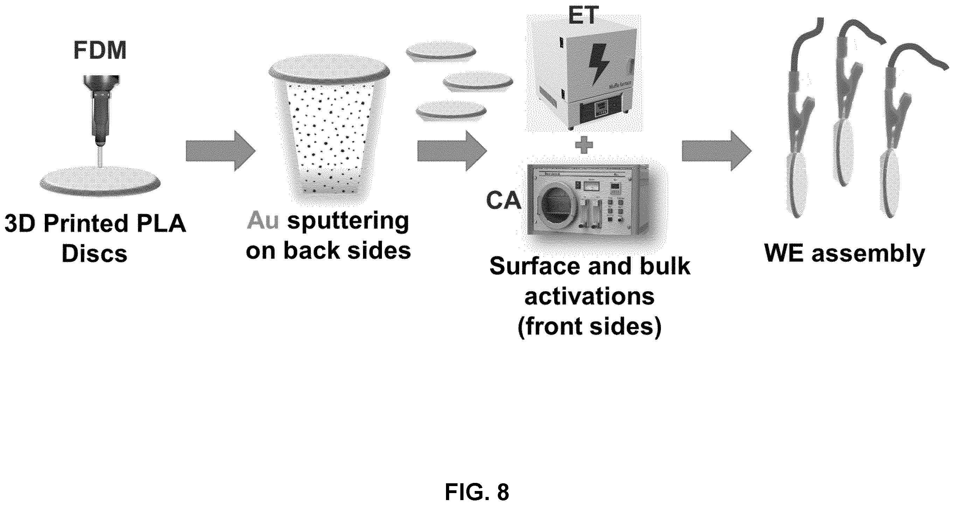

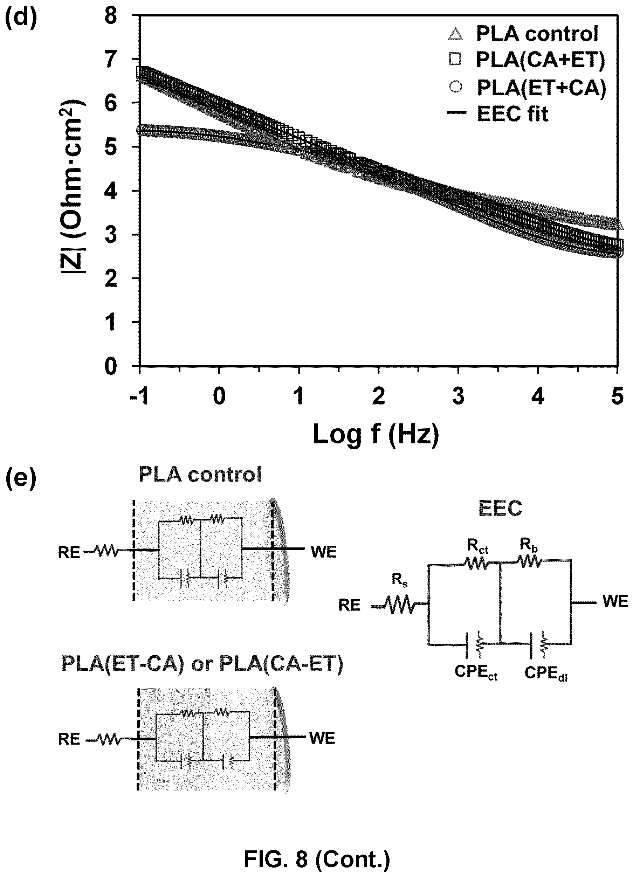

As EIS is an electrochemical technique useful to explore materials interfaces, this method was chosen to confirm the surface changes observed in XPS analyses and that of bulk polymer reflected by CV assays after the different samples' treatments. As it can be seen in Figure 8a, after the 3D-printing, the back side of the discs were Au-sputtered to ensure electrical contact in the whole WE area and connectors. The front side was left exposed to the electrolyte solution (PBS) in the three-electrode cell arrangement.

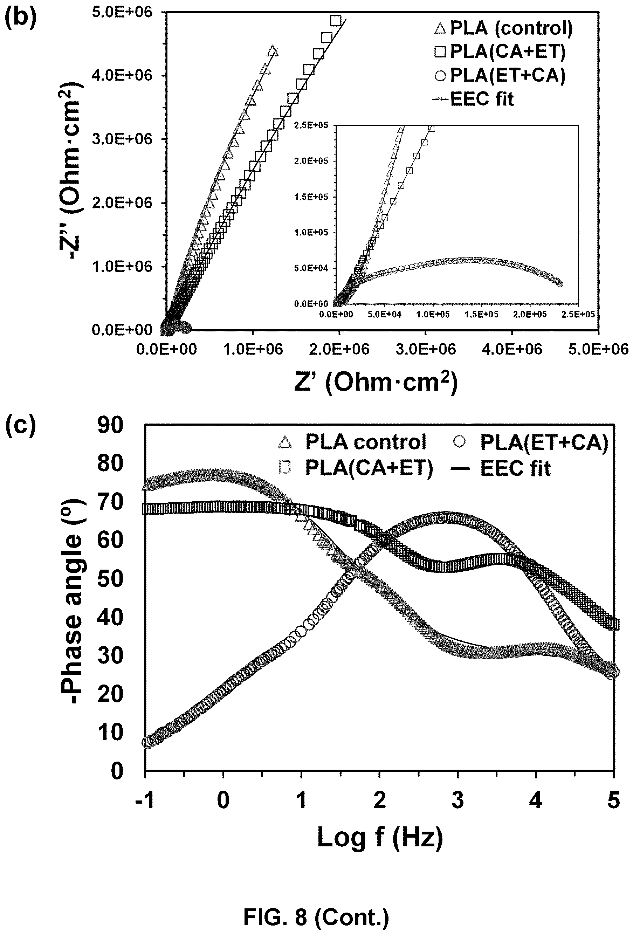

The Nyquist plots of PLA (control), PLA(ET-CA) and PLA(CA-ET) presented varied semicircle behaviours with different time constants, as is displayed in Figure 8b. The electro-thermal re-orientation treatment, followed by the oxygen-gas activation, seems to have the greatest effect on the insulating PLA material, drastically decreasing the bulk resistance (Rb) to 201.0 ± 1.1 kΩ·cm², when compared to untreated PLA discs (48.3 ± 5.5 MΩ·cm2) (Table 4). Instead, the reverse treatment (i.e. first charged gas activation followed by electro-thermal re-orientation) almost doubles the resistance value of the material, when evaluating similar thicknesses (0.5 mm). This has been attributed to the well-known and proved PLA crystallinity phase-changes when this thermoplastic undergoes thermal, electrical, or even mechanical induced transformations. Earlier works have reported thermal and electrical measurements on conductive PLA filaments under heating and cooling conditions. At values close to the glass-transition temperature of PLA (T_{g} ~ 55-60 °C) the polymer resistance suffered a subtle inversion in the R_{b} values, decreasing immediately after overpass the T_{g} and increasing again when the temperature raised from ~65 to 100 °C. However, the resistance reduction was accounted to be rather discrete (60 Ω) in comparison to the results of this work since their commercial plastic contained carbon black additive, which is a semi-conducting material. The most remarkable difference with respect to the present study is that PLA 3D-printed discs, without any additive or plastic treatment, behave as insulators, being converted into semi-conducting polymers by applying the proposed treatment. This represents a challenge for the future preparation of plastic sensors because optimization of the method conditions could offer even lower R_{b} values.

Electrical conductivity is also directly affected by the charge transfer resistance (R_{ct}) of nanometric layers or roughness created at the material surface. This can be identified by the electrolyte diffusion to the plastic surface when non-porous materials are used. Therefore, the R_{ct} values of PLA(CA-ET) and untreated PLA are very similar (Table 4), showing that samples in which last treatment is the electro-thermal re-orientation do not significantly influence the liquid-solid interface, as demonstrated previously by SEM images and WCA measurements. In contrast, PLA(CA-ET) does not exhibit the same behaviour that PLA(ET-CA). This has been attributed to the fact that the charged gas activation process does not influence the polymer crystallinity, even though it is strong enough to create conducting layers through charged oxygen-containing species. Consequently, this interface has lower R_{ct} than those obtained for PLA and PLA(ET-CA) specimens.

**Table 4 - Values of resistances and capacitances obtained for the samples studied by EIS in PBS solution. Data based on fitting of EECs displayed in Figure 15e to the experimental curves.**

| | | *PLA treatments* | |
|---|---|---|---|
| **EEC parameters** | **PLA (control)** | **PLA(CA-ET)** | **PLA(ET-CA)** |
| *Rₛ* (Ω cm²) | 27.0 ± 2.5 | 278 ± 2.5 | 288 ± 1.2 |
| *R_{ct}* (kΩ cm²) | 35.4 ± 8.01 | 6.2 ± 4.4 | 48.9 ± 2.5 |
| *R_{b}* (MΩ cm²) | 48.3 ± 5.5 | 99.2 ± 10.3 | 0.2 ± 1.1 |
| *CPE_{ct}* (µΩ·cm⁻²sⁿ⁻¹) | 4.8 ± 2.5 | 0.7 ± 0.07 | 0.2 ± 2.1 |
| *n* | 0.4 ± 0.7 | 0.6 ± 1.1 | 0.9 ± 1.0 |
| *CPE_{dl}* (µΩ·cm⁻²sⁿ⁻¹) | 0.3 ± 0.8 | 0.3 ± 0.5 | 1.2 ± 3.4 |
| *n* | 0.9 ± 0.2 | 0.7 ± 0.2 | 0.7 ± 0.5 |

Exploring the changes in the constant phase elements (CPEs), no substantial differences were observed since the solid samples were not able to store charge, as it was observed in CV experiments (Figure 6), where narrow voltammetric curves were obtained. This was an expected behaviour since either the charged gas activation, or the electro-thermal re-orientation were not able to create ions or ionic charges in the bulk. Bode plots (Figure 8c-d) confirmed the most resistive response of PLA(CA-ET) and untreated PLA. Data obtained from the electrical equivalent circuits (EEC, Figure 8e) are summarised in Table 4. Overall, EIS results are in fully consistent with the outcomes provided by SEM, XRD, XPS and CV techniques.

### 3.2 Extension to the other polymers and validation of the methodology

As a proof of concept, to extrapolate the approach to other dielectrics, two thermoplastics, which differ mainly from PLA in the content of oxygen, were selected: polyethylene terephthalate glycol (PETG) and polypropylene (PP). PETG is a glycol-modified class of polyethylene terephthalate (PET) that is largely used in manufacturing plastic beverage bottles and food products. Besides, it is polar and degradable to an extend until specific conditions. Instead, PP is a non-polar, biocompatible, and non-biodegradable polymer with high impact strength and flexibility. While PP is an oxygen-free material, the C:O ratio in PETG (2.5) is higher than in PLA (1.5).

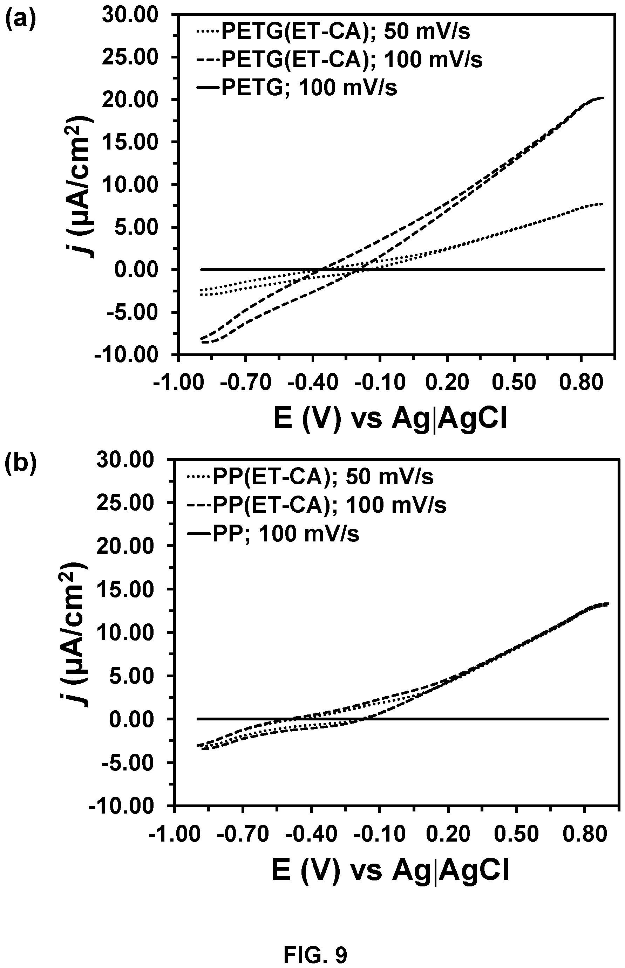

PETG and PP discs of the dimensions identical to those of PLA were produced by 3D printing. Then, the electro-thermal re-orientation and, subsequently, the charged gas activation processes were applied to half of the printed discs using the operational conditions optimized for PLA(ET-CA), the materials obtained using this approach being denoted PETG(ET-CA) and PP(ET-CA). Representative and reproducible CV curves for untreated and treated discs, which were recorded in PBS at scan rates of 50 and 100 mV/s, are compared in Figure 9. While PETG and PP behaved as dielectrics without showing any electrochemical activity, the treated polymers clearly exhibited electrical response. Specifically, the current density increased from -8.1 pA/cm² at the initial potential to 20.2 pA/cm² at the reversal potential for PETG(ET-CA) and from -3.0 pA/cm² to 13.3 pA/cm² for PP(ET-CA). The effect of the scan rate was significant for PETG(ET-CA), as was observed for PLA(ET-CA), while it was practically inexistent for PP(ET-CA). This feature confirms that oxygen atoms play a crucial role in the formation of the species involved in charge transfer processes at the electrode surface.

Overall, the application of the electro-thermal re-orientation followed by the charged gas activation allows to activate the electrochemical response of any dielectric polymer. However, the efficacy of such activation depends on the presence of oxygen and, in turn, on the kind of oxygenated species created during the activation process. Consistently, the electrochemical response of PP(ET-CA) was much lower than that of PLA(ET-CA) and PETG(ET-CA). As the only oxygen atoms in PP are those associated with the thermal oxidation of the own material during the processing of the discs, the formation of electro-responsive species during the treatment is more difficult. Instead, the formation of electrochemically active species in PLA and PETG is favoured by the presence of oxygen-containing functional groups.

### Example 4 - Electrochemical detection of dopamine

Finally, as a proof of concept, the electrochemical detection of dopamine (DA) was tested using a PLA(ET-CA) electrode. DA is an important catecholamine neurotransmitter, whose electrochemical detection has been widely investigated because of its important functions in the human body (e.g. human metabolism, cardiovascular, central nervous, renal, and hormonal systems). Thus, DA is critical for signal transmissions to the brain since an inadequate level of DA is related to severe neurological diseases/disorders, as for example schizophrenia, attention deficit hyperactivity disorder and Parkinson's disease. The electrochemical detection of DA has been afforded using many types of materials, such as conducting polymers, metal oxides, noble metals, bimetallic nanoparticles, carbonaceous materials (i.e. carbon nanotubes and graphene), metal organic frameworks, and MXene, which electrocatalyze the oxidation of dopamine (DA) to dopaminoquinone (DQ), see (2).

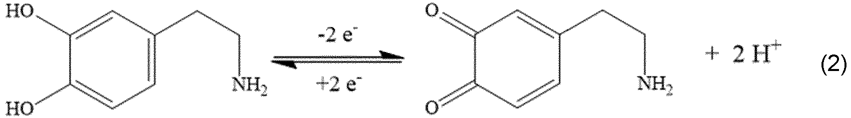

### 4.1 Experimental design

The DA neurotransmitter and phosphate buffered saline (PBS) solution, which was used as electrolyte for electrochemical assays, were also purchased from Sigma Aldrich.

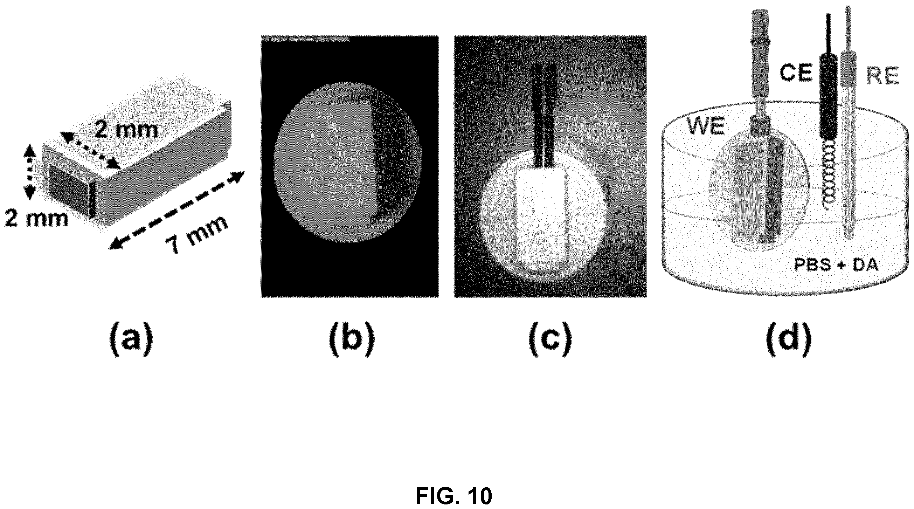

The electrochemical detection of DA was studied by CV using a three-electrode cell and an Autolab VIONIC potentiostat-galvanostat. In this case, 3D printed PLA specimens consisted of rectangular parallelepipeds of size 7.0 × 2.0 × 2.0 mm³ with one embedded well of 7.0 × 1.0 ×1.0 mm³ printed on a face with the smallest area (2.0 × 2.0 mm²) and a small protuberance, also with rectangular parallelepiped shape (1.5 × 1.5 ×1.0 mm³), at the opposite face (Figure 10a). After the corresponding treatment/s (i.e. electro-thermal re-orientation and/or charged gas activation), one of the faces with the largest area (7.0 × 2.0 mm²) was coated with Kapton^{®} tape disc (13 mm in diameter and 0.5 mm in thickness) to improve the voltammetric signal (Figure 10b). Finally, the potentiostat-galvanostat was connected to the WE by using a glassy carbon rod, which was introduced in the cavity of the printed specimen (Figure 10c). The glassy carbon rod acted as a simple electrical connector and was never in contact with the electrolytic medium (i.e. the printed protuberance avoided the contact between the connector and the electrolytic medium), as is sketched (Figure 10d). The CE and RE were identical to those described above for electrochemical characterisation.

Measurements were performed by adding different concentrations of DA (from 50 to 1000 µM) to a PBS solution. CV curves were recorded at a scan rate of 100 mV/s. The initial and final potentials were -0.90 V, and the reversal potential was +0.90 V. Results from detection assays displayed in the article correspond to the average of three replicates (n=3) for each experiment.

### 4.2 - Detection of dopamine

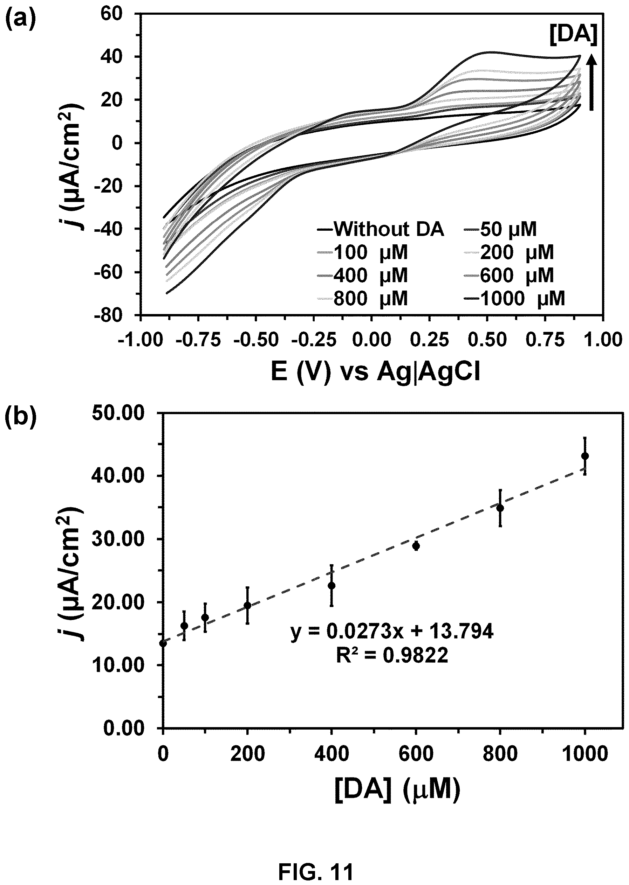

The voltammograms recorded in PBS with increasing additions of DA are displayed in Figure 11a. The oxidation peak was well resolved at PLA(ET-CA) electrodes with peak potential at ~0.3 V at low DA concentrations and ∼0.4 V at high DA concentrations. The shift in the peak potential to higher values with increasing DA concentration is caused by the participation of protons in the electrode reaction (i.e. the pH decreases with increasing DA concentration). On the other hand, the anodic peak current increases with the concentration of DA, which indicates that (i) PLA(ET-CA) shows electrocatalytic activity in the oxidation of DA, and (ii) the adsorption of oxidized DA molecules in the surface of the electrode is a favoured process. In contrast, the effect is much less pronounced for the cathodic current associated with the reduction peak at ∼0.1 V.

The calibration curve was built in the range of 50-1000 µM (R² = 0.9902) using the anodic peak current (Figure 11b). The variation of the anodic peak current with the DA concentration was linear (R² = 0.9822) in the whole interval. The limit of detection, which was calculated according to the formula (3·*σ*) / *m,* where *m* is the slope of the calibration curve and *σ* is standard deviation of the blank signal, was 6.3 µM. This preliminary study proves the success of the ET+CA approach to transform oxygen-containing insulating plastics into electrochemically responsive materials with a great potential for biosensing applications. Based on these results, in a near future, we will conduct a specific study to propose PLA(ET-CA) and other modified electrodes as selective multiplexed sensors for neurotransmitters. For this purpose, the electrochemical response of such electrodes will be examined in PBS solutions containing both DA and serotonin with concentrations comprised between 1 nM and 5 µM in the presence of interferents (i.e. uric acid and ascorbic acid), as well as in real biological fluids (i.e. sweat, tear, urine, blood, plasma).

### Example 5 - Conclusion

Electro-thermal re-orientation (ET) combined with charged gas activation (CA) is a successful approach to convert insulating thermoplastics into electro-responsive materials. The synergistic behaviour of such processes when applied in that particular order has been demonstrated by comparing the properties of PLA(ET+CA) with those of PLA(CA+ET), PLA(ET) and PLA(CA). The new approach is a useful tool to easily fabricate 3D printed electrodes for biosensing from insulating thermoplastic filaments without adding expensive conducting materials, such as carbon-based structures (e.g. carbon nanotubes and graphene), metallic nanoparticles (e.g. Au and Pt nanoparticles), or even conducting polymers (e.g. poly(3,4-ethyelenedioxythiophene).

The proposed approach has been exhaustively studied using 3D printed PLA specimens, even though its effectiveness has also been evaluated using other polymers (PP and PETG). As it was expected, after treatment, the electro-response of oxygen-containing polymers, PLA and PETG, is greater than that of the oxygen-free polymer, PP. Finally, as a proof of concept, we demonstrate the electrochemical detection of DA, an important neurotransmitter related with a wide variety of neurological diseases, using 3D printed PLA(ET-CA) electrodes. Results show that PLA(ET-CA) electrocatalyses the oxidation of DA to DQ and allows its detection in a wide interval of concentrations (from 50 to 1000 µM). Overall, these developments pave the way for the ease of fabrication of innovative electrodes for electrochemical biosensing.

## Claims

1. A method for transforming a dielectric material into an electrical semiconductor, the method comprising a step of treating the dielectric part under an electro-response inducing procedure, wherein the electro-response inducing procedure comprises, in this specific order:
- an electro-thermal re-orientation treatment; followed by
- a charged gas activation treatment.

2. The method according to claim 1, wherein:
- the electro-thermal re-orientation treatment is applied at a temperature between 80-1400°C, and at a voltage between 100-1000 V, preferably 500 V; and/or wherein
- the charged gas activation treatment is applied at a gas pressure between 0.2-1.0 mbar, preferably 0.8 mbar, and at a power between 50-500 W, preferably 100 W.

3. An electrical semiconductor made of a dielectric material, wherein the dielectric material is modified by an electro-response inducing procedure, and wherein the electro-response inducing procedure comprises, in this specific order:
- an electro-thermal re-orientation treatment; followed by
- a charged gas activation treatment.

4. The electrical semiconductor according to claim 3, wherein the dielectric material is a ceramic material, a thermoplastic material, or a composite material.

5. The electrical semiconductor according to claim 4, wherein the dielectric material is selected from the group consisting of hydroxyapatite, silica, polylactic acid (PLA), polypropylene (PP), polyethylene terephthalate glycol (PETG), thermoplastic polyurethane (TPU), polyvinyl alcohol (PVA); acrylonitrile butadiene styrene (ABS), nylon-6, nylon-6,6, nylon polymers, nylon blends, BPA polycarbonate, polycarbonates, polyethylene terephthalate (PET), polybutylene terephthalate (PBT), polyhexamethylene terephthalate (PHT), polypropylene terephthalate (PTT), polyesters, polyester amides, and combinations thereof.

6. The electrical semiconductor according to any one of claims 4 or 5, wherein the dielectric material is an oxygen-containing thermoplastic polymer, preferably polylactic acid (PLA) and/or polyethylene terephthalate glycol (PETG), or an oxygen-free thermoplastic polymer, preferably polypropylene (PP).

7. The electrical semiconductor according to any one of claims 3 to 6, wherein the electrical semiconductor is a part prepared by a method of 3D-shaping that uses a mould or a nozzle, preferably wherein the electrical semiconductor is a part prepared by 3D printing, 3D moulding, injection, extrusion, or chemical polymerisation followed by mould deposition.

8. Use, in an application that requires an electrical response, of an electrical semiconductor made of a dielectric material, wherein the dielectric material is modified by an electro-response inducing procedure, and wherein the electro-response inducing procedure comprises, in this specific order:
- an electro-thermal re-orientation treatment; followed by
- a charged gas activation treatment.

9. The use according to claims 8, wherein the application that requires an electrical response is a use in bioelectronics and/or organic electronics, preferably wherein the application is selected from the group consisting of electrodes in sensors, cell biostimulation, electrotherapy, biomedical tools, components of biocapacitors, supercapacitors and/or batteries, smart textiles, electromagnetic shielding, polymer-based membranes, plastic electrical cables.

10. The use according to any one of claims 8 or 9, wherein the electrical semiconductor made of a dielectric material is used as an electrode.

11. The use according to any one of claims 8 to 10, wherein the electrical semiconductor made of a dielectric material is used as an electrochemical sensor.

12. The use according to claim 11, wherein the electrical semiconductor made of a dielectric material is used as an electrochemical sensor for the detection of an analyte selected from the group consisting of dopamine, glucose, lactate, serotonin, urea, uric acid, aspartic acid, NADH (nicotinamide adenine dinucleotide), insulin and other analytes with redox properties.

13. The use according to claim 12, wherein the electrical semiconductor made of a dielectric material is used as an electrochemical sensor for the detection of dopamine.
